# EUROPÄISCHE PATENTSCHRIFT

(11) **EP 2 337 972 B1**
(45) Veröffentlichungstag und Bekanntmachung des Hinweises auf die Patenterteilung: **06.01.2016**
(21) Anmeldenummer: 09737352.6
(22) Anmeldetag: 13.10.2009
(51) Int. Cl.: F16H 3/72, F16H 37/08

(54) **GETRIEBEMOTOR, GETRIEBESYSTEM UND VERFAHREN ZUM BETRIEB EINES SYSTEMS**
TRANSMISSION ENGINE, TRANSMISSION SYSTEM AND METHOD FOR OPERATING A SYSTEM
MOTORÉDUCTEUR, SYSTÈME DE TRANSMISSION ET PROCÉDÉ DE FONCTIONNEMENT D'UN SYSTÈME

(30) Priorität: 21.10.2008 DE 102008052546
(43) Veröffentlichungstag der Anmeldung: 29.06.2011
(73) Patentinhaber: SEW-EURODRIVE GmbH & Co. KG, 76646 Bruchsal (DE)
(72) Erfinder: HANNET, Stefan, 68782 Brühl (DE); LUTZ, Markus, 75417 Mühlacker (DE); THIELEMANN, Stefan, 68753 Waghäusel (DE)
(86) Internationale Anmeldenummer: PCT/EP2009/007337
(87) Internationale Veröffentlichungsnummer: WO 2010/046045

(56) Entgegenhaltungen:
- EP-A1- 0 075 667
- EP-A1- 0 454 530
- EP-A1- 1 314 910
- DE-A1- 2 503 762
- DE-A1-102006 061 463
- DE-B- 1 295 297

## Beschreibung

Die Erfindung betrifft einen Getriebemotor, ein Getriebesystem und ein Verfahren zum Betrieb eines Systems.

Es ist bekannt, Getriebe von einem Motor anzutreiben. Solche Systeme werden auch als Getriebemotor bezeichnet. Im Teillastbetrieb oder bei niedrigen Drehzahlen werden keine optimalen Wirkungsgrade erzielt, da der Getriebemotor derart ausgelegt und konstruiert sein muss, dass er die Nennlast antreiben kann, also im Vollastbetrieb betreibbar ist.

Es ist auch bekannt, als vom Motor angetriebene Getriebe Schaltgetriebe zu verwenden. Hierbei ist aber bei hohen Drehzahlen nur ein niedrigeres Drehmoment erreichbar als bei niedrigen Drehzahlen.

Die EP 454 530 zeigt die Merkmale des Oberbegriffs des Anspruchs 1.

Der Erfindung liegt die Aufgabe zugrunde, die Umweltbelastung zu reduziert.

Erfindungsgemäß wird die Aufgabe bei dem Getriebemotor nach den in Anspruch 1, bei dem Getriebesystem nach den in Anspruch 8 und bei dem Verfahren zum Betrieb eines Systems nach den in Anspruch 9 angegebenen Merkmalen gelöst.

Wichtige Merkmale der Erfindung bei dem Getriebemotor sind, dass er ein Getriebe, insbesondere ein Umlaufgetriebe, und Motoren umfasst,
wobei das Getriebe mindestens eine Getriebestufe umfasst,
wobei eine erste Getriebestufe des Getriebes von einem ersten Motor, insbesondere Elektromotor, antreibbar und/oder angetrieben ist,
wobei die Getriebestufe Verzahnungsteile umfasst,
wobei ein weiterer Motor, insbesondere Elektromotor, eines der Verzahnungsteile antreibt.

Der Motor ist dabei vorzugsweise umrichtergespeist oder anderweitig drehzahlsteuerbar oder drehzahlregelbar.

Von Vorteil ist dabei, dass über einen weiten Drehzahlenbereich ein im Wesentlichen konstantes und hohes Drehmoment erzeugbar ist. Insbesondere ist also das maximal erzeugbare Drehmoment im ganzen, für den Betrieb des Getriebemotors zulässigen Drehzahlbereich des Getriebemotors im Wesentlichen konstant. Konstant umfasst hierbei auch Abweichungen bis 5 % des Maximalwertes. Der für den Betrieb des Getriebemotors zulässige Drehzahlbereich ist bestimmt durch den vom ersten Motor erzeugbaren Drehzahlbereich, wobei der weitere Motor die Drehzahl Null aufweist und die Kippgrenze, also das Kippmoment des ersten Motors, nicht überschritten wird. Ein beispielhafter Drehzahlbereich bei einem netzbetriebenen umrichtergespeisten Motor Ist Null bis 3500 Umdrehungen pro Minute.

Besonders vorteilig ist die Erfindung auch bei Positionieranwendungen, wobei der Getriebemotor häufig mit Wechsellast betrieben wird, also das nicht-verschwindende Lastmoment nur kurzzeitig konstant ist.

Außerdem ist vorteilig, dass der Wirkungsgrad optimal ist und somit Energie eingespart wird, also die Umwelt entlastet wird.

Bei einer vorteilhaften Ausgestaltung treibt der weitere Motor das Verzahnungsteil antreibt, Indem der weitere Motor eine oder mehrere Getriebestufen, insbesondere Stirnradstufen, antreibt, wobei die Abtriebswelle einer der Getriebestufen das Verzahnungsteil antreibt. Von Vorteil ist dabei, dass eine noch höhere Drehzahl oder alternativ ein noch höheres Drehmoment auf das Verzahnungsteil übertragbar ist. Somit ist das Abtriebs-Drehmoment des Überlagerungsgetriebes über einen weiten Bereich von Abtriebsdrehzahlen konstant haltbar.

Bei einer vorteilhaften Ausgestaltung ist das vom weiteren Motor angetriebene Verzahnungsteil nicht mit der vom ersten Motor direkt angetriebenen Welle des Getriebes direkt verbunden und ist somit nicht die gleiche Drehzahl wie die eintreibende Welle aufweisend. Von Vorteil ist dabei, dass der weitere Motor sozusagen an einer Verzweigung des Getriebes eingreift, also nicht direkt gegen den ersten Motor arbeitet sondern gegenseitig verstärkend.

Bei einer vorteilhaften Ausgestaltung ist die erste Getriebestufe eine Umlaufgetriebestufe, wie Planetengetriebestufe, Exzentergetriebestufe oder Zyklogetriebestufe,
wobei das vom weiteren Motor angetriebene Verzahnungsteil ein Hohlrad ist oder ein vom weiteren Motor angetriebenes, Rollen aufnehmendes Teil ist. Von Vorteil ist dabei, dass ein sowieso für das Funktionieren der Getriebestufe notwendiges Teil nur leicht modifiziert werden muss, also eine Außenverzahnung und eine Lagerung erhalten muss, um die Erfindung auszuführen.

Bei einer vorteilhaften Ausgestaltung sind die Umlaufräder Planetenräder oder Zykloscheiben. Von Vorteil ist dabei, dass die Erfindung bei verschiedenen Sorten von Getrieben einsetzbar ist.

Bei einer vorteilhaften Ausgestaltung ist das Hohlrad beziehungsweise das die Rollen aufnehmende Teil außenverzahnt, wobei ein vom weiteren Motor angetriebenes Verzahnungsteil in diese Außenverzahnung eingreift. Von Vorteil ist dabei, dass die Drehbewegung des Verzahnungsteils in einfacher Weise bewerkstelligbar ist.

Bei einer vorteilhaften Ausgestaltung greift an einer Innenverzahnung des Hohlrades eine jeweilige Außenverzahnung der Umlaufräder ein, welche auf mit der Abtriebswelle verbundenen Planetenbalzen gelagert sind. Von Vorteil ist dabei, dass eine Planetengetriebestufe als erste Getriebestufe verwendbar ist.

Bei einer vorteilhaften Ausgestaltung ist das Hohlrad oder das die Rollen aufnehmende Teil über ein Lager auf der Abtriebswelle drehbar gelagert. Von Vorteil ist dabei, dass geringe Reibungsverluste entstehen, wenn die relative Drehzahl gering ist, währenddessen die absolute gegen die Umgebung vorhandene Drehzahl dabei sein kann.

Bei einer vorteilhaften Ausgestaltung ist das Getriebe als Zyklogetriebe ausgeführt, wobei exzentrisch angetriebene zykloidenverzehnte Scheiben an in Umfangsrichtung hintereinander angeordneten Rollen abrollen,
wobei die Rollen des Zyklogetriebes an einem die Rollen aufnehmenden, außenverzahnten Teil befestigt oder ausgebildet sind, so dass ein vom weiteren Motor angetriebenes Verzahnungsteil in dieser Außenverzahnung eingreift und dieses in Drehbewegung versetzbar ist. Von Vorteil ist dabei, dass ebenfalls auch bei einem Zyklo- oder Excenter-Getriebe das Teil in einfacher Weise in Bewegung versetzbar ist und somit eine Überlagerung der Bewegungen erreichbar ist.

Bei einer vorteilhaften Ausgestaltung ist der erste Motor ein Getriebemotor, also umfasst eine oder mehrere, von einem Motor angetriebene Getriebestufen. Von Vorteil ist dabei, dass die Drehzahl des eintreibenden Motors, insbesondere ein Elektromotor, herabsetzbar ist und somit das maximal ermöglichte antreibende Drehmoment des eintreibenden ersten Motors heraufsetzbar ist.

Wichtige Merkmale bei dem Getriebesystem sind, dass es einen vorbeschriebenen Getriebemotor und eine Steuerung umfasst, wobei die Drehzahlen und/oder Drehmomente des ersten und weiteren Motors mittels der Steuerung steuerbar oder regelbar sind, insbesondere wobei entsprechende Sensoren vorgesehen sind.

Von Vorteil ist dabei, dass der Gesamtwirkungsgrad des Getriebesystems auf möglichst optimale Werte bringbar ist. Da die Drehzahlen und Drehmomente eines ersten und eines weiteren Motors im Überlagerungsgetriebe gekoppelt werden, sind zu jedem einzelnen erzeugbaren abtriebsseitigen Drehmomentwert und Drehzahlwert mehrere Drehzahlenpaarungen und auch Drehmomentpaarungen von erstem zum zweiten Motor ermöglicht.

Wichtige Merkmale bei dem Verfahren zum Betrieb eines Systems, das ein von mindestens zwei Motoren angetriebenes Überlagerungsgetriebe, insbesondere einen vorbeschriebenen Getriebemotor, umfasst, wobei die beiden Motoren derart betrieben werden, dass der Wirkungsgrad des Systems optimal ist, insbesondere auch bei verschiedenen AbtriebsDrehzahlen im Vollastbetrieb und Teillastbetrieb.

Von Vorteil ist dabei, dass über einen weiten Bereich von Drehzahlen, insbesondere den gesamten, bei Stillstand des weiteren Motors, mittels des ersten Motors erzeugbaren Abtriebsdrehzahlen ein im Wesentlichen konstantes Drehmoment erreichbar ist. Insbesondere bei Servoapplikationen und Synchronapplikationen ist dies vorteilhaft.

Weitere Vorteile ergeben sich aus den Unteransprüchen.

### Bezugszeichenliste

M1 Elektromotor
M2 Elektromotor
G Überlagerungsgetriebe
S Steuerung

1 Hohlrad mit Außenverzahnung
2 Abtriebswelle
3 Lager
4 Lager
5 Einsteckritzel mit Sonnenrad als Aufsteckritzel
6 Nadellager für Hohlradlagerung auf Planetenträger
7 Planet
8 Ritzelwelle
9 Zahnrad
10 Aufsteckritzel

Die Erfindung wird nun anhand von Abbildungen näher erläutert:

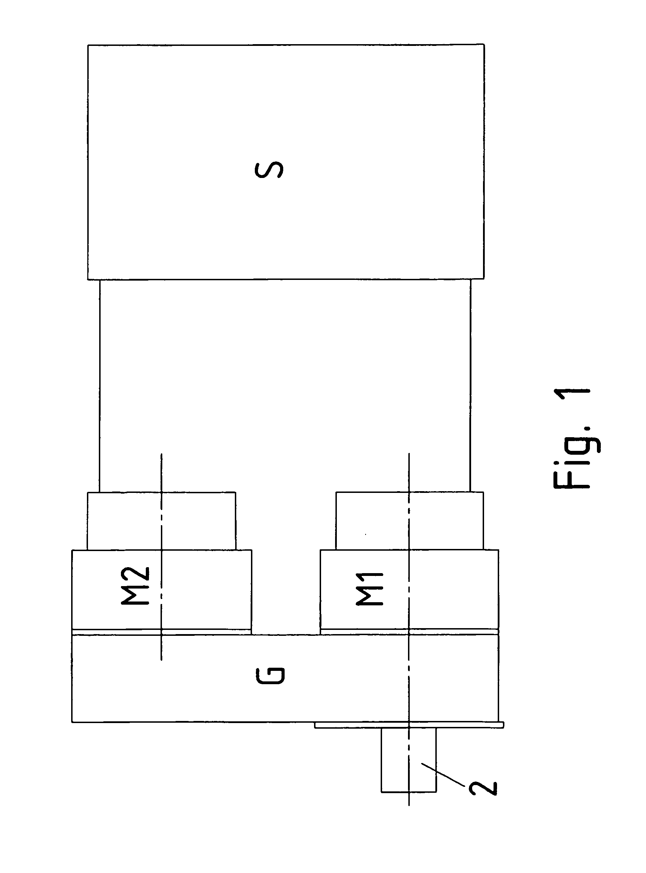

In der Figur 1 ist eine erfindungsgemäße Vorrichtung symbolisch gezeigt. Hierbei ist ein erster Elektromotor M1 zum Antreiben eines ersten Verzahnungsteils eines Überlagerungsgetriebes G und ein zweiter Elektromotor M2 zum Antreiben eines zweiten Verzahnungsteils des Überlagerungsgetriebes G vorgesehen. Das erste Verzahnungsteil ist dabei mit der eintreibenden Rotorwelle des Motors M1 verbunden.

Somit gleicht die Drehzahl der abtreibenden Welle 2 der mit der ersten Übersetzungszahl multiplizierten Drehzahl der eintreibenden Welle. Die Übersetrungszahl ist jedoch eine Funktion der Drehzahl des zweiten Verzahnungsteils. Wenn diese Null ist, gleicht die Gesamtübersetzung des Überlagerungsgetriebes der ersten Übersetzungszahl.

Mittels der Steuerung S sind die Drehzahlen der Motoren M1 und M2 steuerbar oder regelbar. Somit sind je nach erforderlicher Abtriebsdrehzahl und abhängig vom benötigten Drehmoment die Drehzahlen und/oder Betriebszustände der Motoren M1 und M2 vorgebbar.

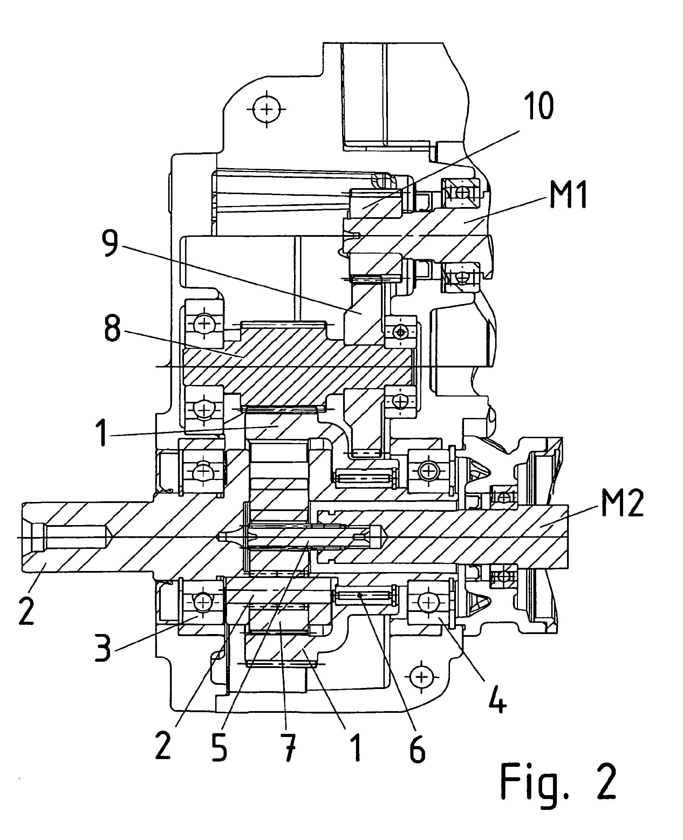

In der Figur 2 ist das Überlagerungsgetriebe genauer gezeigt. Dabei ist ein vom Motor M2 angetriebenes Planetengetriebe vorgesehen.

Die Rotorwelle des Motors M1 wird mit dem Aufsteckritzel 10 kraftschlüssig oder formschlüssig verbunden. Die zugehörige Ritzelverzahnung steht in Eingriff mit dem Zahnrad 9 einer als Ritzelwelle ausgeführten Zwischenwelle 8. Die Ritzelverzahnung dieser Zwischenwelle 8 steht im Eingriff mit einer Außenverzahnung eines Hohlrades 1, das mittels Nadellager 6 auf dem Planetenträger gelagert ist. Der Planetenträger ist auch Abtriebswelle 2 und ist beidseitig des Hohlrades gelagert über die Lager (3, 4). Am Planetenträger sind Planeten bolzen vorgesehen, auf denen Planeten 7 gelagert sind, die einerseits mit einer Innenverzahnung des Hohlrades 1 und andererseits mit einem als Sonne wirksamen Verzahnungstell. Dieses Verzahnungsteil ist als Einsteckritzel 5 realisiert oder alternativ als Aufsteckritzel, das auf einem Zapfen aufgesteckt ist, der mit seinem dem Aufsteckritzel axial abgewandten Endbereich in die Rotorwelle des Motors M2 eingesteckt verbunden ist.

Wichtig hierbei ist also, dass im Unterschied zu einem üblichen Getriebemotor, der als Planetengetriebe ausgeführt ist, bei dem das Sonnenrad von einem Elektromotor angetrieben wird, nun bei der Erfindung ein Verzahnungstell, insbesondere das Hohlrad des Planetengetriebes, von einem weiteren Motor angetriebenen Ist und somit zwei Drehbewegungen überlagert werden.

## Patentansprüche

1. Getriebemotor, umfassend ein Getriebe, insbesondere Umlaufgetriebe, und Motoren (M1, M2),
wobei das Getriebe mindestens eine Getriebestufe umfasst,
wobei eine erste Getriebestufe des Getriebes von einem ersten Motor (M2), insbesondere Elektromotor, antreibbar und/oder angetrieben ist,
wobei das Getriebe ein Planetengetriebe ist,
wobei die Getriebestufe Verzahnungsteile umfasst.
wobei ein weiterer Motor (M1), insbesondere Elektromotor, eines der Verzahnungsteile (1) antreibt,
wobei der weitere Motor (M1) das Verzahnungsteil (1) antreibt, indem der weitere Motor eine einzige Stirnradstufe (9, 10) antreibt, wobei die Abtriebswelle (8) der Stirnradstufe eine Verzahnung aufweist, welche das Verzahnungsteil (1) antrelbt,
wobei die erste Getriebestufe eine Umlaufgetriebestufe ist,
wobei das vom weiteren Motor (M1) angetriebene Verzahnungsteil (1) ein Hohlrad Ist oder ein vom weiteren Motor angetriebenes, Rollen aufnehmendes Teil ist,
wobei das Hohlrad beziehungsweise das die Rollen aufnehmende Teil außenverzahnt ist, wobei ein vom weiteren Motor angetriebenes Verzahnungsteil in diese Außenverzahnung eingreift,
wobei an einer Innenverzahnung des Hohlrades eine Jeweilige Außenverzahnung der Umlaufräder eingreift, welche auf mit der Abtriebswelle verbundenen Planetenbolzen gelagert sind, **dadurch gekennzeichnet, dass**
- entweder die Sonne des Getriebes als Einsteckritzel ausgeführt ist und in die Rotorwelle des Elektromotors eingesteckt verbunden Ist
- oder die Sonne des Getriebes als Aufsteckritzel ausgeführt Ist, das auf einen Zapfen aufgesteckt ist, der in die Rotorwelle des Elektromotors eingesteckt verbunden ist,

2. Getriebemotor nach Anspruch 1
**dadurch gekennzeichnet, dass**
das vom weiteren Motor angetriebene Verzahnungsteil nicht mit der vom ersten Motor direkt angetriebenen Welle des Getriebes direkt verbunden und somit nicht die gleiche Drehzahl wie die eintreibende Welle aufweisend ist.

3. Getriebemotor nach mindestens einem der vorangegangenen Ansprüche,
**dadurch gekennzeichnet, dass**
die Umlaufgetriebestufe eine Planetengetriebestufe, Exzentergetriebestufe oder Zyklogetriebestufe ist.

4. Getriebemotor nach mindestens einem der vorangegangenen Ansprüche,
**dadurch gekennzeichnet, dass**
die Umlaufräder Planetenräder oder Zykloscheiben sind.

5. Getriebemotor nach mindestens einem der vorangegangenen Ansprüche,
**dadurch gekennzeichnet, dass**
das Hohlrad oder das die Rollen aufnehmende Teil über ein Lager auf der Abtriebswelle drehbar gelagert ist.

6. Getriebemotor nach mindestens einem der vorangegangenen Ansprüche,
**dadurch gekennzeichnet, dass**
das Getriebe als Zyklogetriebe ausgeführt ist, wobei exzentrisch angetriebene zykloidenverzahnte Scheiben an in Umfangsrichtung hintereinander angeordneten Rollen abrollen,
wobei die Rollen des Zyklogetriebes an einem die Rollen aufnehmenden, außenverzahnten Teil befestigt oder ausgebildet sind, so dass ein vom weiteren Motor angetriebenes Verzahnungsteil in dieser Außenverzahnung eingreift und dieses in Drehbewegung versetzbar ist.

7. Getriebemotor nach mindestens einem der vorangegangenen Ansprüche,
**dadurch gekennzeichnet, dass**
der erste Motor ein Getriebemotor ist, also eine oder mehrere, von einem Motor angetriebene Getriebestufen umfasst.

8. Getriebesystem, umfassend einen Getriebemotor nach mindestens einem der vorangegangenen Ansprüche und eine Steuerung,
**dadurch gekennzeichnet, dass**
die Drehzahlen und/oder Drehmomente des ersten und weiteren Motors mittels der Steuerung steuerbar oder regelbar sind, insbesondere wobei entsprechende Sensoren vorgesehen sind.

9. Verfahren zum Betrieb eines Systems, das ein von mindestens zwei Motoren angetriebenes Überlagerungsgetriebe, insbesondere Getriebemotor nach mindestens einem der vorangegangenen Ansprüche, umfasst,
**dadurch gekennzeichnet, dass**
die beiden Motoren derart betrieben werden, dass der Wirkungsgrad des Systems optimal ist,
**wobei die beiden Motoren derart betrieben werden, dass der Wirkungsgrad des Systems auch bei verschiedenen Abtriebs-Drehzahlen im Vollastbetrieb und Teillastbetrieb optimal Ist,**
**wobei Drehzahl und/oder Drehmoment der beiden Motoren derart gesteuert oder geregelt werden, dass über einen weiten Bereich von Drehzahlen, ein konstantes Drehmoment erzeugt wird,**
**wobei der weite Bereich derjenige Drehzahlbereich Ist, welcher alle, bei Stillstand des weiteren Motors mittels des ersten Motors erzeugbaren Abtriebsdrehzahlen aufweist.**

## Claims

1. Geared motor, comprising a gearing, in particular epicyclic gearing, and motors (M1, M2),
wherein the gearing comprises at least one gearing stage,
wherein a first gearing stage of the gearing is drivable and/or driven by a first motor (M2), in particular electric motor,
wherein the gearing is a planetary gearing,
wherein the gearing stage comprises toothing parts,
wherein a further motor (M1), in particular electric motor, drives one of the toothing parts (1),
wherein the further motor (M1) drives the toothing part (1) by the further motor driving a single spur gear stage (9, 10), the output shaft (8) of the spur gear stage having a toothing which drives the toothing part (1),
wherein the first gearing stage is an epicyclic gearing stage,
wherein the toothing part (1) driven by the further motor (M1) is a ring gear or is a part driven by the further motor and receiving rollers,
wherein the ring gear or the part receiving the rollers is externally toothed, a toothing part driven by the further motor engaging in this external toothing,
wherein there engages on an internal toothing of the ring gear a respective external toothing of the epicyclic gears, which are mounted on planet bolts connected to the output shaft, **characterised in that**
- either the sun of the gearing is configured as a plug-in pinion and is connected in a manner plugged into the rotor shaft of the electric motor,
- or the sun of the gearing is configured as a plug-on pinion which is plugged onto a pin which is connected in a manner plugged into the rotor shaft of the electric motor.

2. Geared motor according to Claim 1,
**characterised in that** the toothing part driven by the further motor is not connected directly to the shaft, driven directly by the first motor, of the gearing and thus does not have the same rotational speed as the input shaft.

3. Geared motor according to at least one of the preceding claims,
**characterised in that**
the epicyclic gearing stage is a planetary gearing stage, eccentric gearing stage or cycloidal gearing stage.

4. Geared motor according to at least one of the preceding claims,
**characterised in that**
the epicyclic gears are planetary gears or cycloidal discs.

5. Geared motor according to at least one of the preceding claims,
**characterised in that**
the ring gear or the part receiving the rollers is rotatably mounted via a bearing on the output shaft.

6. Geared motor according to at least one of the preceding claims,
**characterised in that**
the gearing is configured as a cycloidal gearing, eccentrically driven cycloidal-toothed discs rolling on rollers arranged one behind the other in the circumferential direction,
wherein the rollers of the cycloidal gearing are fastened or formed on an externally toothed part receiving the rollers, so that a toothing part driven by the further motor engages in this external toothing and said part can be set in rotational movement.

7. Geared motor according to at least one of the preceding claims,
**characterised in that**
the first motor is a geared motor, thus comprises one or more gearing stages driven by a motor.

8. Gearing system, comprising a geared motor according to at least one of the preceding claims and a control,
**characterised in that**
the rotational speeds and/or torques of the first and further motor are controllable or regulable by means of the control, in particular wherein corresponding sensors are provided.

9. Method for operating a system, which comprises a superposition gearing driven by at least two motors, in particular geared motor according to at least one of the preceding claims,
**characterised in that**
the two motors are operated in such a way that the efficiency of the system is optimal,
wherein the two motors are operated in such a way that the efficiency of the system is optimal also at different output rotational speeds in full-load operation and part-load operation,
wherein rotational speed and/or torque of the two motors are controlled or regulated in such a way that a constant torque is generated over a wide range of rotational speeds,
wherein the wide range is the rotational speed range which has all the output rotational speeds generatable by means of the first motor when the further motor is at a standstill.

## Revendications

1. Motoréducteur, comprenant un engrenage, en particulier un engrenage à satellites, et des moteurs (M1, M2),
l'engrenage comprenant au moins un étage d'engrenage,
un premier étage d'engrenage de l'engrenage pouvant être entraîné et/ou étant entraîné par un premier moteur (M2), en particulier un moteur électrique,
l'engrenage étant un engrenage planétaire,
l'étage d'engrenage comprend des pièces dentées,
un autre moteur (M1), en particulier un moteur électrique, entraînant une des pièces dentées (1),
l'autre moteur (M1) entraînant la pièce dentée (1) par le fait que l'autre moteur entraîne un seul étage à engrenage cylindrique (9, 10), l'arbre de sortie (8) de l'étage à engrenage cylindrique présentant une denture qui entraîne la pièce dentée (1),
le premier étage d'engrenage étant un étage d'engrenage à satellites,
la pièce dentée (1) entraînée par l'autre moteur (M1) étant une couronne à denture intérieure ou une pièce supportant des rouleaux, entraînée par l'autre moteur,
la couronne à denture intérieure ou la pièce supportant les rouleaux présentant une denture extérieure, une pièce dentée entraînée par l'autre moteur engrenant avec cette denture extérieure,
une denture extérieure respective des roues satellites qui sont montées sur des axes de planétaire reliés à l'arbre de sortie engrenant avec une denture intérieure de la couronne à denture intérieure,
**caractérisé en ce que**
- soit la roue solaire de l'engrenage est réalisée sous la forme d'un pignon à emmanchement et est emmanchée dans l'arbre de rotor du moteur électrique,
- soit la roue solaire de l'engrenage est réalisée sous la forme d'un pignon creux qui est monté sur un tourillon qui est emmanché dans l'arbre de rotor du moteur électrique.

2. Motoréducteur selon la revendication 1,
**caractérisé en ce que**
la pièce dentée entraînée par l'autre moteur n'est pas directement reliée à l'arbre de l'engrenage directement entraîné par le premier moteur et ne présente donc pas la même vitesse de rotation que l'arbre d'entrée.

3. Motoréducteur selon au moins l'une des revendications précédentes,
**caractérisé en ce que**
l'étage d'engrenage à satellites est un étage d'engrenage planétaire, un étage d'engrenage excentrique ou un étage d'engrenage cycloïdal.

4. Motoréducteur selon au moins l'une des revendications précédentes,
**caractérisé en ce que**
les roues satellites sont des roues planétaires ou des disques cycloïdaux.

5. Motoréducteur selon au moins l'une des revendications précédentes,
**caractérisé en ce que**
la couronne à denture intérieure ou la pièce supportant les rouleaux sont montées tournantes sur l'arbre de sortie au moyen d'un palier.

6. Motoréducteur selon au moins l'une des revendications précédentes,
**caractérisé en ce que**
l'engrenage est réalisé sous la forme d'un engrenage cycloïdal, dans lequel des disques à denture cycloïdale entraînées excentriquement roulent sur des rouleaux disposés les uns derrière les autres dans la direction périphérique,
les rouleaux de l'engrenage cycloïdal étant fixés ou configurés sur une pièce à denture extérieure supportant les rouleaux de façon qu'une pièce dentée entraînée par l'autre moteur engrène avec cette denture extérieure et puisse être mise en mouvement de rotation.

7. Motoréducteur selon au moins l'une des revendications précédentes,
**caractérisé en ce que**
le premier moteur est un motoréducteur, donc un ou plusieurs étages d'engrenage entraînés par un moteur.

8. Système d'engrenage, comprenant un motoréducteur selon au moins l'une des revendications précédentes et une commande,
**caractérisé en ce que**
les vitesses de rotation et/ou couples du premier et de l'autre moteur peuvent être commandés ou régulés au moyen de la commande, des capteurs correspondants étant en particulier prévus.

9. Procédé pour faire fonctionner un système qui comprend un engrenage à superposition entraîné par au moins deux moteurs, en particulier un motoréducteur selon au moins l'une des revendications précédentes,
**caractérisé en ce que**
les deux moteurs fonctionnent de façon que le rendement du système soit optimal,
les moteurs fonctionnant de façon que le rendement du système soit optimal même à différentes vitesses de rotation de sortie en fonctionnement à pleine charge et en fonctionnement à charge partielle,
vitesse de rotation et/ou couple des deux moteurs étant commandés ou régulés de façon qu'un couple constant soit produit sur une large plage de vitesses de rotation,
la large plage étant la plage de vitesses de rotation qui présente toutes les vitesses de rotation de sortie pouvant être produites au moyen du premier moteur lorsque l'autre moteur est à l'arrêt.
